(19) Europäisches Patentamt / European Patent Office / Office européen des brevets

(11) **EP 1 993 809 B2**

(12) **NOUVEAU FASCICULE DE BREVET EUROPEEN**
Après la procédure d'opposition

(45) Date de publication et mention de la décision concernant l'opposition:
**20.04.2022 Bulletin 2022/16**

(45) Mention de la délivrance du brevet:
**19.09.2012 Bulletin 2012/38**

(21) Numéro de dépôt: **07731004.3**

(22) Date de dépôt: **16.02.2007**

(51) Classification Internationale des Brevets (IPC):
**B29C 55/28** (2006.01)    **B29C 71/02** (2006.01)
**B32B 27/08** (2006.01)    **B29L 9/00** (2006.01)

(52) Classification Coopérative des Brevets (CPC):
**B29C 55/28; B29C 48/0018; B29C 48/10;**
B29C 71/02; B29C 2071/022; B29L 2009/00

(86) Numéro de dépôt international:
**PCT/FR2007/000293**

(87) Numéro de publication internationale:
**WO 2007/099214 (07.09.2007 Gazette 2007/36)**

(54) **PROCEDE DE FABRICATION D'UN FILM MULTICOUCHE**

VERFAHREN ZUR HERSTELLUNG EINES MEHRSCHICHTIGEN FILMS

METHOD FOR MAKING A MULTILAYER FILM

(84) Etats contractants désignés:
**AT BE BG CH CY CZ DE DK EE ES FI GB GR HU IE IS IT LI LT LU LV MC NL PL PT RO SE SI SK TR**

(30) Priorité: **28.02.2006 FR 0601790**

(43) Date de publication de la demande:
**26.11.2008 Bulletin 2008/48**

(73) Titulaire: **LINPAC PACKAGING PONTIVY**
**56920 Noyal-Pontivy (FR)**

(72) Inventeur: **LE DUIGOU, Thierry**
**F-56000 Vannes (FR)**

(74) Mandataire: **Hoffmann Eitle**
**Patent- und Rechtsanwälte PartmbB**
**Arabellastraße 30**
**81925 München (DE)**

(56) Documents cités:
| | |
|---|---|
| **EP-A- 1 057 870** | **EP-A1- 0 589 436** |
| **EP-A1- 1 190 847** | **EP-A1- 1 985 444** |
| **EP-B1- 1 084 035** | **WO-A-01/03922** |
| **WO-A-2004/033200** | **WO-A2-2004/080805** |
| **US-A1- 2003 157 350** | **US-A1- 2005 282 025** |
| **US-B1- 6 203 750** | **US-B1- 6 420 046** |
| **US-B2- 6 764 729** | |

EP 1 993 809 B2

**Description**

La présente invention concerne un procédé de fabrication d'un film multicouche, rétractable ou non rétractable, et un film multicouche correspondant. La présente invention concerne plus particulièrement un procédé de fabrication de films d'emballage rétractables, notamment pour l'emballage de produits alimentaires, pour une utilisation sur des operculeuses pour l'operculage de barquettes ou conteneurs, ainsi que de films d'emballage non rétractables, pour une utilisation sur des operculeuses ou sur des machines Formeuse-remplisseuse-scelleuse, verticale ou horizontale, communément appelées machines Form-Fill-Seal, VFFS ou HFFS.

De tels films comportent classiquement au moins une couche de surface extérieure, comprenant notamment une résine polyester ou une résine polyoléfine, une couche intermédiaire comprenant notamment une résine polyamide, et une couche de surface intérieure de thermo-scellage ou thermo- soudage comprenant notamment une résine thermo-scellable ou thermo-soudable.

Les propriétés requises pour de tels films d'emballage sont notamment de bonnes propriétés mécaniques (rigidité, résistance mécanique, perforation) pour faciliter le passage sur les machines d'emballage tout en garantissant la protection du produit emballé ; une bonne soudabilité (basse température de soudure avec de fortes résistances de soudures), de bonnes propriétés optiques (transparence avec un faible voile et brillant élevé), et une résistance thermique pour éviter une fusion lors de l'operculage. Pour de nombreuses applications, de tels films d'emballage doivent également pouvoir présenter une fonction barrière aux gaz, notamment à l'oxygène pour l'emballage sous atmosphère modifiée. Dans le cas de l'operculage rétractable, la contrainte ou force de rétraction imposée par le film sur la barquette lors de l'opération d'operculage doit être la plus faible possible pour ne pas déformer la barquette, tout en conservant un aspect tendu de l'operculage tout au long de la durée de conservation du produit.

Pour obtenir de telles propriétés, les films doivent être orientés biaxialement dans la direction machine ou longitudinale (MD) et dans la direction transversale (TD).

Selon un premier procédé par banc d'étirage, dit à plat, couramment appelé procédé « tenter frame », le film extrudé est bi-orienté à plat séquentiellement. Un tel procédé à plat s'avère relativement compliqué et coûteux à mettre en œuvre, et est réservé pour l'application de très forts taux d'étirement, supérieurs à 5 dans la direction MD ou TD, afin d'obtenir des films présentant des taux de rétraction et des contraintes de rétraction importants, inutilisables pour l'operculage de barquettes sans déformation de celles-ci. Lorsque le film comprend une couche à base de résine cristalline ou partiellement cristalline, notamment dans le cas d'une couche barrière de type résine copolymère éthylène/ alcool vinylique (EVOH), la bi- orientation séquentielle du film s'avère impossible. En effet, la résine se cristallise lors de la première orientation dans la direction machine MD, cette cristallisation induit une augmentation de la résistance du film qui limite ou empêche l'orientation suivante du film dans la direction transversale TD. Ainsi, pour certains types de film, seule une bi-orientation simultanée du film est possible. Toutefois, le dispositif de mise en œuvre d'un procédé à plat avec bi-orientation simultanée nécessite une technologie avancée et s'avère très onéreuse.

De tels films bi-orientés peuvent également être obtenus, sans phase intermédiaire de lamination de couches, selon un procédé par gonflage, dit à bulle, moins compliqué et moins coûteux à mettre en œuvre que le procédé à plat. Selon un procédé connu à double bulle, les différentes résines sont coextrudées pour former un film tubulaire sous la forme d'une première bulle, ledit film comportant au moins une couche de surface extérieure, une couche intermédiaire, et une couche de surface intérieure de thermo-scellage. Le film tubulaire est ensuite refroidi, aplati, puis bi-orienté simultanément dans les deux directions MD et TD par réchauffement et gonflage du film tubulaire sous la forme d'une deuxième bulle, puis enroulé. Ce procédé double bulle tel que décrit, ne permet pas de contrôler efficacement le taux et la contrainte de rétraction du film produit, tel que requis en particulier pour l'operculage sans déformation de barquettes. Les films obtenus présentent de forts taux de rétraction, qui ne peuvent être ajustés à des valeurs de 0 à 5% dans l'eau à 90°C dans la direction TD et MD. Par ailleurs, les films obtenus présentent de faibles résistances au déchirement, qui sont insuffisantes pour permettre l'ouverture d'un seul tenant de l'opercule dans le cas d'operculage de barquettes dites à ouverture facile ou pelables, en particulier lorsque les films sont très fins, avec des épaisseurs inférieures à 50 μm, tels que recherchés actuellement dans le domaine de l'emballage pour réduire notamment les coûts en matières premières. La force de délamination de ces films, en particulier entre la couche de thermo-soudage ou thermo-scellage par laquelle le film est soudé à la barquette et la couche adjacente, s'avère également insuffisante pour garantir l'ouverture d'un seul tenant.

Pour ajuster le taux et la contrainte de rétraction du film, il a été proposé, notamment dans le document brevet EP 1 084 035, un procédé par gonflage à triple bulle dans lequel, après formation d'un film tubulaire sous la forme d'une première bulle, puis regonflage sous la forme d'une deuxième bulle pour bi-orienter simultanément le film dans les deux directions MD et TD, tel que décrit précédemment, le film tubulaire est refroidi et mis à plat, pour être regonflé sous la forme d'une troisième bulle pour être stabilisé par un traitement thermique à l'eau ou à la vapeur, à une faible température comprise entre 60 et 98°C, de préférence de 60 à 80°C, afin de réduire sa contrainte de rétraction tout en gardant un taux de rétraction suffisant pour l'operculage, d'au moins 20%, de préférence d'au moins 30% dans l'eau à 90°C dans chaque direction TD et MD. Dans le document EP 1 190 847, un procédé triple bulle analogue est utilisé pour former des films présentant des taux de rétraction d'au moins 40% dans l'eau à 90°C dans au moins une des directions TD et MD. Le procédé triple bulle proposé permet de réduire la force de rétraction du film, mais cette dernière, inférieure à 3 MPa à 50°C dans chaque direction, demeure trop importante, notamment pour une utilisation du film sur des barquettes dites sensibles, mal conçues et/ou légères en matière. Par ailleurs, les films obtenus présentent, comme pour le procédé double-bulle, de faibles résistances au déchirement et à la délamination, qui s'avèrent insuffisantes pour un retrait aisé du film dans le cas d'operculage de barquettes à ouverture facile, qui sont de plus en plus demandées de nos jours.

Le but de la présente invention est de proposer un procédé de fabrication d'un film multicouche palliant les inconvénients précités, qui permet notamment l'obtention d'un film pour l'operculage de barquettes, sans distorsion des barquettes et avec une ouverture d'un seul tenant, y compris dans le cas de films fins, d'épaisseur inférieure ou égale à 50 μm.

A cet effet, la présente invention a pour objet un procédé de fabrication d'un film multicouche, thermorétractable ou non, comprenant :

a) une étape de coextrusion de résines pour former un film tubulaire extrudé sous la forme d'une première bulle, ledit film tubulaire comportant au moins une couche de surface extérieure comprenant une résine polyester ou une résine polyoléfine, une couche intermédiaire comprenant une résine polyamide, et une couche de surface intérieure de thermo-scellage ou thermo-soudage comprenant une résine polyoléfine ou un mélange de résines polyoléfine,
b) une étape d'orientation biaxiale du film tubulaire chauffé sous la forme d'une deuxième bulle, et
c) une étape de stabilisation par traitement thermique, et éventuellement de relaxation du film tubulaire sous la forme d'une troisième bulle, ledit procédé étant caractérisé en ce que lors de l'étape de stabilisation c), le film tubulaire est porté à une température de stabilisation supérieure ou égale à la température de fusion de la résine polyoléfine majoritaire de ladite couche de surface intérieure de thermo-scellage.

Selon la présente invention, la température de stabilisation appliquée à la troisième bulle est supérieure ou égale à la température de fusion du constituant principal thermo-scellable de la couche de surface intérieure de thermo-scellage, à savoir supérieure ou égale à la température de fusion de la résine polyoléfine thermo-scellable constituant la couche de surface intérieure de thermo- scellage ou, dans le cas d'une couche de surface intérieure de thermo-scellage comprenant un mélange de résines polyoléfine, supérieure ou égale à la température de fusion de la résine polyoléfine thermo-scellable principale majoritaire en poids dans le mélange de résines polyoléfine, ladite température de stabilisation étant inférieure aux températures de fusion des résines constitutives des autres couches, à savoir de la couche de surface extérieure et de la ou des couches intermédiaires. L'application d'une telle température de stabilisation permet de fondre et de désorienter sélectivement, au moins partiellement, cette couche de surface intérieure de thermo-scellage. Cette étape essentielle permet de diminuer la rétraction thermique et la contrainte de rétraction thermique de l'ensemble du film et, de manière surprenante, d'augmenter la résistance au déchirement et la force de délamination de la couche de surface intérieure de thermo-scellage du reste de la structure du film. Le procédé selon l'invention permet l'obtention de films rétractables fins, avec des taux de rétraction variables, adaptés pour l'operculage de barquettes, sans distorsion des barquettes et avec une ouverture d'un seul tenant.

Selon une particularité, la température de stabilisation et le taux de relaxation appliqués à la troisième bulle de l'étape c) sont déterminés de sorte que le film multicouche refroidi obtenu après l'étape c) présente une résistance au déchirement supérieure ou égale à 30 N/mm, tant dans la direction machine MD que dans la direction transversale TD, de préférence supérieure ou égale à 40 N/mm, mieux encore supérieure ou égale à 50 N/mm, et/ou une résistance à la délamination de la couche de surface intérieure de thermo-scellage supérieure à 15 N/15mm dans la direction machine MD et la direction TD.

Le procédé selon l'invention permet d'ajuster avec une grande souplesse les taux de rétraction MD et TD ainsi que la contrainte de rétraction qui sera notamment appliquée sur la barquette lors de l'operculage, en jouant sur la température de stabilisation et/ou le taux de relaxation de la troisième bulle. Selon une particularité, la température de stabilisation et le taux de relaxation appliqués à la troisième bulle de l'étape c) sont déterminés de sorte que le film multicouche refroidi obtenu après l'étape c) présente un taux de rétraction total, (c'est-à-dire la somme des taux de rétraction MD et TD) à 120°C sous air sec inférieur à 35%, de préférence inférieur à 30%, mieux encore inférieur à 20%, et/ou une contrainte de rétraction à 60°C inférieure ou égale à 3 MPa, de préférence inférieure ou égale à 2,5 MPa, mieux encore inférieure ou égale à 2 MPa, tant dans la direction machine MD que dans la direction transversale TD.

Le procédé selon l'invention est principalement destiné à la fabrication de film rétractable, mais peut bien entendu être utilisé pour l'obtention de film non rétractable présentant une bonne résistance au déchirement et à la délamination. On entend par film « non rétractable » un film présentant un taux de rétraction total inférieur ou égal à 2% à 90°C dans l'eau, et inférieur ou égal à 10% à 120°C sous air sec.

Avantageusement, le traitement thermique du film tubulaire à la température de stabilisation dans l'étape c) est réalisé au moyen d'un four infrarouge, ladite température de stabilisation étant comprise entre 80 et 150°C, de préférence entre 100 et 140°C. Dans la présente, les plages de valeurs indiquées s'entendent bornes incluses.

Avantageusement, le taux de relaxation longitudinal MD et le taux de relaxation transversal TD appliqués à la troisième bulle de l'étape c) sont chacun compris entre 5 et 20%.

Selon une particularité, le taux d'étirement transversal TD appliqué à la deuxième bulle dans l'étape b) est compris entre 2,5 et 4,5, de préférence entre 3 et 4, le taux d'étirement longitudinal MD appliqué étant compris entre 2,5 et 4, de préférence entre 2,5 et 3,5, mieux encore entre 2,8 et 3.

La présente invention a également pour objet un film multicouche, rétractable ou non rétractable, susceptible d'être obtenu par le procédé défini précédemment, comportant au moins une couche de surface extérieure comprenant une résine polyester ou une résine polyoléfine, une couche intermédiaire comprenant une résine polyamide PA, et une couche de surface intérieure de thermo- scellage comprenant une résine polyoléfine ou un mélange de résines polyoléfine, caractérisé en ce que ladite couche de surface intérieure de thermo-scellage est au moins partiellement désorientée et en ce que ledit film présente une résistance au déchirement supérieure ou égale à 30 N/mm, tant dans la direction machine MD que dans la direction transversale TD, de préférence supérieure ou égale à 40 N/mm, mieux encore supérieure ou égale à 50 N/mm, et une résistance à la délamination de la couche de surface intérieure de thermo-scellage supérieure à 15 N/15mm dans les directions machine MD et transversale TD ; et éventuellement :

- un taux de rétraction total à 120°C sous air sec inférieur à 35%, de préférence inférieur à 30%, mieux encore inférieur à 20%, et/ou
- une contrainte de rétraction à 60°C inférieure ou égale à 3 MPa, tant dans la direction machine MD que dans la direction transversale TD, et/ou
- une épaisseur totale comprise entre 20 et 50 $\mu$m.

Selon un mode de réalisation, le film multicouche comporte une couche de surface extérieure comprenant une résine polyoléfine ayant un point de fusion entre 130 et 170°C, de préférence un polypropylène (PP), ou une résine polyester ayant un point de fusion compris entre 200 et 260°C, de préférence une résine polyéthylène téréphtalate (PET), une couche intermédiaire comprenant une résine polyamide (PA) ayant un point de fusion compris entre 130 et 220°C, et une couche de surface intérieure de thermo-scellage comprenant une résine polyoléfine ou un mélange de résines polyoléfine dont la résine polyoléfine majoritaire a un point de fusion inférieur aux points de fusion des résines constitutives de la couche externe et de la couche intermédiaire, compris entre 80 et 150°C, ladite couche de surface intérieure de thermo-scellage comprenant de préférence une résine polyéthylène (PE) ayant un point de fusion compris entre 80 et 150°C, de préférence entre 90 et 140°C, ou une résine polypropylène ayant un point de fusion compris entre 120 et 150°C. Ledit film présente de préférence une structure à 7 couches de type PET ou PP/résine adhésive/PA/résine barrière/PA/résine adhésive/PE.

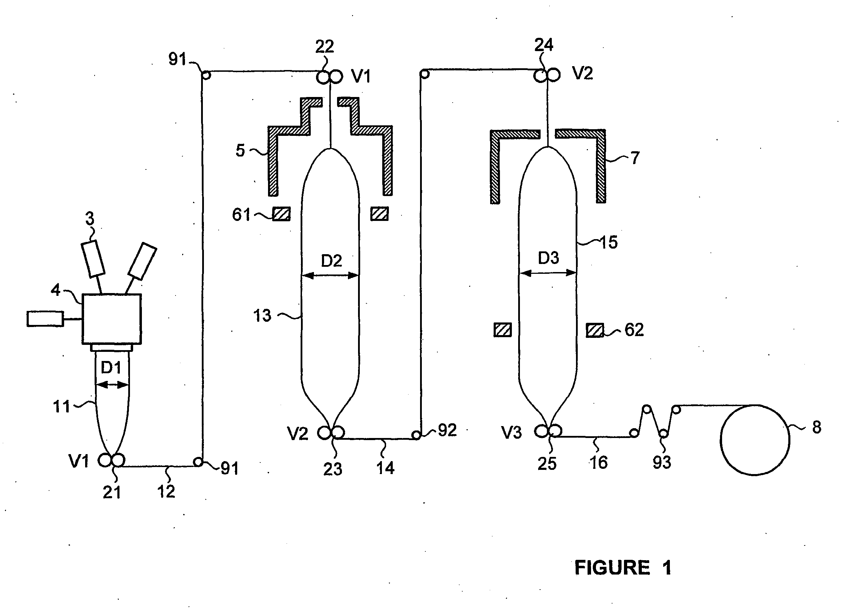

L'invention sera mieux comprise, et d'autres buts, détails, caractéristiques et avantages apparaîtront plus clairement au cours de la description explicative détaillée qui va suivre d'un mode de réalisation non limitatif d'un procédé de fabrication selon l'invention, en référence au dessin schématique annexé, sur lequel la figure 1 représente une vue schématique d'un dispositif dit triple bulle pour la mise en œuvre du procédé selon l'invention.

Le film multicouche rétractable ou non rétractable selon l'invention comprend au moins trois couches, une couche de surface extérieure, une couche intermédiaire, et une couche de surface intérieure de thermo- scellage, avec une épaisseur totale avantageusement comprise entre 20 et 50$\mu$m. La couche de surface extérieure, directement en contact avec l'extérieur lors de l'utilisation du film comprend au moins une résine polyoléfine (Po) présentant un point de fusion entre 130 et 170°C, de préférence un polypropylène (PP), ou au moins une résine polyester présentant un point de fusion compris entre 200 et 260°C, de préférence un Polyéthylène téréphtalate (PET) pour garantir un bon passage machine sur les operculeuses. La couche intermédiaire, qui procure la résistance mécanique et l'orientation du film, comprend une résine polyamide (PA) ou un mélange de résines polyamide présentant un point de fusion compris entre 130 et 220°C. La couche de surface intérieure de thermo- scellage, destinée à venir en vis-à-vis du produit emballé, sert de couche scellante ou soudante. Cette couche de surface de thermo-scellage est constituée d'une résine polyoléfine (Po) ou comprend une résine polyoléfine (Po) majoritaire, tel qu'un polyéthylène (PE), présentant un point de fusion compris entre 80 et 150°C.

Suivant les applications, un ou plusieurs additifs peuvent être ajoutés à l'une des couches, tel qu'un agent antibuée à la résine Po de la couche de surface intérieure. Le film multicouche peut comprendre des couches intermédiaires supplémentaires, notamment une couche barrière comprenant une résine barrière aux gaz, telle qu'une résine copolymère éthylène-alcool vinylique (EVOH), et/ou des couches de liaison comprenant une résine adhésive lorsque l'adhérence entre les couches précitées s'avère insuffisante.

A titre d'exemple, le film multicouche comprend une structure à 7 couches de type Polyester/résine adhésive/PA/résine barrière/PA/résine adhésive/Po, et en particulier une structure de type : PET/résine adhésive/PA/EVOH/PA/résine adhésive/PE. En variante, la couche Polyester extérieure est remplacée par une couche Po, en particulier une couche PP, dont le point de fusion est supérieur au point de fusion de la couche Po intérieure.

Le film selon l'invention est obtenu selon un procédé par gonflage, à triple bulle. En référence à la figure 1, les différentes résines constitutives du film provenant d'extrudeuses 3 sont coextrudées à travers une filière annulaire 4 pour former un film tubulaire sous la forme d'une première bulle 11, dite bulle primaire comprenant au moins trois couches tel que décrit précédemment, soit une couche polyester ou polyoléfine extérieure, une couche PA intermédiaire et une couche Po scellante. Le nombre d'extrudeuses, dont uniquement trois sont représentées sur la figure, sera bien entendu adapté au nombre de couches du film et/ou au nombre de résines différentes utilisées pour réaliser les différentes couches du film. Cette bulle primaire 11 permet de figer la matière à un diamètre D1 de bulle primaire calibré. La bulle primaire est ensuite reprise par une première paire de rouleaux pinceurs 21 pour mettre le film tubulaire à plat.

Le film tubulaire à plat refroidi, référencé 12, est réchauffé et regonflé sous la forme d'une deuxième bulle entre une deuxième et une troisième paires de rouleaux pinceurs, respectivement 22 et 23. Cette deuxième bulle 13, formée par introduction d'air entre lesdites paires de rouleaux pinceurs 22, 23, permet d'étirer le film tubulaire dans la direction machine MD et la direction transversale TD pour l'orienter biaxialement, et ainsi lui conférer ses caractéristiques mécaniques et ses caractéristiques de rétraction. En sortie de la deuxième bulle, le film tubulaire est non stabilisé et se rétracte en fonction de la température.

Le taux d'étirement longitudinal MD correspond au rapport (V2/V1) entre la vitesse V2 de la troisième paire de rouleaux pinceurs 23 et la vitesse V1 de la deuxième paire de rouleaux pinceurs 22. Le taux d'étirement transversal TD correspond quant à lui au taux de gonflage qui est égal au rapport (D2/D1) entre le diamètre D2 de la deuxième bulle et le diamètre D1 de la bulle primaire. L'épaisseur du film final est fonction de l'épaisseur de la bulle primaire et des taux d'étirement MD et TD suivant la relation :

$$e_{finaie} = e_{primaire} / (\text{taux d'étirement MD} \times \text{taux d'étirement TD})$$

Le film tubulaire à plat 12 en sortie de la bulle primaire est transféré, via des rouleaux 91, de la première à la deuxième paire de rouleaux pinceurs. Un refroidissement peut être réalisé lors de ce transfert par passage dudit film à plat dans un bain d'eau de refroidissement (non représenté). Le film est avantageusement réchauffé avant gonflage en une deuxième bulle par passage dans un premier four infrarouge 5 disposé en aval de la deuxième paire de rouleaux 22. La température du film avant gonflage est avantageusement comprise entre 70 et 100°C, plus particulièrement entre 70 et 80°C pour la fabrication d'un film rétractable, et de 80 à 100°C pour un film dit non rétractable présentant un taux de rétraction total inférieur ou égal à 2% à 90°C dans l'eau et inférieur ou égal à 10% à 120°C sous air sec.

Le taux de gonflage ou taux d'étirement TD appliqué est compris entre 2,5 et 4,5, le taux d'étirement MD appliqué étant compris entre 2,5 et 4, soit un taux d'orientation global (taux d'étirement MD x taux d'étirement TD) de 6,25 à 18, de préférence un taux de gonflage de 3 à 4 et un taux d'étirement MD de 2,5 à 3,5, soit un taux d'orientation global de 7,5 à 14, mieux encore un taux de gonflage de 3 à 3,5 et un taux d'étirement MD de 2,8 à 3 soit un taux d'orientation global de 8;4 à 10,5.

La deuxième bulle 13 est avantageusement refroidie par un anneau d'air froid 61 avant d'être repris par la troisième paire de rouleaux pinceurs 23 pour remettre le film à plat.

En sortie de deuxième bulle, le film à plat, référencé 14, se refroidit lors de son transfert entre des rouleau 92, et est ensuite réchauffé et regonflé sous la forme d'une troisième bulle 15 par introduction d'air entre une quatrième et une cinquième paires de rouleaux pinceurs, respectivement 24 et 25. Cette troisième bulle a pour fonction de stabiliser plus ou moins le film tubulaire en température, c'est- à-dire de faire varier le taux de rétraction de celui- ci en fonction de la température et donc d'ajuster selon les besoins son taux de rétraction et sa contrainte de rétraction. Selon l'invention, le film sous la forme de troisième bulle est réchauffé à une température de stabilisation supérieure ou égale à la température de fusion de la résine Po majoritaire de la couche scellante ou de la résine Po constituant la couche scellante. Avantageusement, ce réchauffement du film est réalisé à partir de sa couche de surface extérieure par passage dans un deuxième four infrarouge 7. Un tel four infrarouge permet d'égaler ou de dépasser la température de fusion de la résine Po majoritaire ou constitutive de la couche scellante sans risque de collage ou de soudure de film.

Lors de cette étape de stabilisation par traitement thermique, la troisième bulle 15 peut être soumise à une relaxation dans la direction machine MD et/ou transversale TD. Le taux de relaxation TD correspond au rapport (D3/D2) entre le diamètre D3 de la troisième bulle et le diamètre D2 de la deuxième bulle, avec D3≤D2, le taux de relaxation MD correspondant au rapport (V3/V2) entre la vitesse V3 de la cinquième paire de rouleaux pinceurs 25 et la vitesse V2 de la quatrième paire de rouleaux 24, avec V3 ≤ V2.

Le film tubulaire est porté à une température de stabilisation comprise entre 80 et 150°C, plus particulièrement entre 80 et 120°C pour la fabrication d'un film rétractable, et de 120 à 150°C pour un film dit non rétractable, avec un taux de relaxation MD et un taux de relaxation TD chacun compris entre 5 et 20%.

La troisième bulle est ensuite refroidie par un anneau d'air de refroidissement 62 pour figer la couche de scellage avant de refermer la troisième bulle par passage dans la cinquième paire de rouleaux pinceurs 25. Le film sera avantageusement refroidi par l'anneau d'air de refroidissement 62 à une température inférieure à 30°C. En sortie de la cinquième paire de rouleaux pinceurs, le film tubulaire à plat 16 peut être enroulé en une bobine 8 après passage via des rouleaux 93.

Exemples 1-7 et Exemple Comparatif

Les films à 7 couches des exemples 1 à 7 et de l'exemple comparatif ont été préparés selon le procédé triple bulle décrit précédemment. Le tableau 1 ci-dessous présente les résines utilisées et les épaisseurs de couches obtenues pour les films des différents exemples.

TABLEAU I

| | | Exemples. 1-5 Ex comparatif | Exemple 6 | Exemple 7 |
|---|---|---|---|---|
| Couche (épaisseur) | Couche 1 Polyester (4 µm) | PET | PET | PET |
| | Couche 2 Résine adhésive (1,5 µm) | PE Plastomer modifié MAH | PE Plastomer modifié MAH | PE Plastomer modifié MAH |
| | Couche 3 PA (6,5 µm) | PA6+ 5 % en poids PA amorphe | PA6.66 | PA6 + PA6.12 à 50/50 p/p, |
| | Couche 4 Résine barrière (1,5 µm) | EVOH | EVOH | EVOH |
| | Couche 5 PA (6,5 µm) | PA6+ 5 % en poids de PA amorphe | PA6.66 | PA6 + PA6.12 à 50/50 p/p |
| | Couche 6 Résine adhésive (1,5 µm) | PE Plastomer modifié MAH | PE Plastomer modifié MAH | PE Plastomer modifié MAH |
| | Couche 7 Po (8,5µm) | PE MP= 100°C | PE MP= 100°C | PE MP= 100°C |

- PET : produit commercialisé sous la dénomination CRISTAR 446, par la société DOLDER (I.V=0.71 ; MP=220°C)

- PE Plastomer modifié MAH : copolymère éthylène/α-oléfine modifié anhydride maléique, commercialisé sous la dénomination ADMER NF911E par la société MITSUI (d=0.90 g/cm³, MFI=2.5g/10min)

- PA6 : produit commercialisé sous la dénomination Grilon F40NL par la société EMS (MVI=25ml/10min ; MP=220°C)

- PA6.66 : produit commercialisé sous la dénomination PA6.66 N5034B par la société UBE (viscosité relative=4 ; MP=192°C)

-PA6.12 : produit commercialisé sous la dénomination Grilon CF7, par la société EMS (MVI=100ml/10min ; MP=155°C)

- EVOH : produit commercialisé sous la dénomination EVAL SP482, par la société KURARAY (d=1.18 g/cm³)

- PE : copolymère éthylène/α-oléfine, commercialisé sous la dénomination Affinity PL1881G par la société DOW Chemical (d=0.903 g/cm³ ; MFI=1g/10min ; MP=100°C)

- PA amorphe : PA copolymère 6I/6T commercialisé sous la dénomination Grivory G21 par la société EMS (MVI=75ml/10min ; Tg=125°C)

Les conditions opératoires pour la fabrication des différents films sont présentées dans le tableau II ci-après. Les films selon l'invention des exemples 1-7 ont été obtenus en appliquant une température de stabilisation supérieure ou égale à la température de fusion (MP) de la couche PE de thermo-scellage de 100 °C, le film de l'exemple comparatif ayant été obtenu avec une température de stabilisation de 91°C, inférieure à la température de fusion de la couché PE.

Les différents films obtenus ont été testés pour leurs propriétés physiques suivantes.

Rétraction au bain-marie

Un échantillon de film, sur lequel est dessiné un carré de 10 cm de côté, dont les côtés sont dessinés parallèlement aux directions longitudinal MD et transversale TD de la bobine de film, est plongé dans un bain-marie à une température fixée (90°C), pendant 1 à 3 secondes. A sa sortie, l'échantillon revient à température ambiante à l'air libre. Les distances entre les côtés du carré initialement dessiné, sont prises, puis est effectué un calcul de pourcentage de rétraction du rectangle obtenu, par rapport à celui de départ. Le taux de rétraction MD, respectivement TD, est fonction de la distance mesurée entre les côtés du carré qui sont parallèles, respectivement perpendiculaires, au sens transversal.

Rétraction à l'air sec

Un carré de film de 10 cm de côté, dont les côtés sont parallèles aux directions longitudinale et transversale de la bobine de film, est placé entre deux grilles métalliques. L'ensemble (grilles + film) est placé pendant 5 minutes dans une étuve à une température fixée (100, 120, et 140°C). Au sortir de l'étuve, l'ensemble est laissé à l'air libre pour refroidir. Une mesure des dimensions du rectangle de film obtenu est faite, puis un calcul du pourcentage de rétraction du carré initial est réalisé. Le taux de rétraction MD, respectivement TD, est fonction de la distance mesurée entre les côtés du carré qui sont parallèles, respectivement perpendiculaires, au sens transversal.

Résistance au déchirement

Cette mesure est réalisée conformément à la norme française NF EN ISO 6383-1, à ceci près que la force de déchirement considérée dans l'expression de la résistance au déchirement, est la force maximale nécessaire à la propagation de la fissure dans l'éprouvette, les résultats sont exprimés en Newton par millimètre d'épaisseur (N/mm). La mesure est réalisée sur cinq éprouvettes, à une vitesse de 250 mm/min, sur un banc de traction Lloyd Instruments ayant une cellule de mesure de 100N.

Traction- Contrainte et Allongement à la rupture

Cinq éprouvettes de 15mm de largeur sont soumises à un essai de traction, le résultat de l'essai étant la moyenne de ces cinq résultats exprimés en MPa pour la contrainte et en % pour l'allongement. Elles sont placées entre les mors pneumatiques du banc de traction de Lloyd Instruments, muni d'une cellule de 100N. Les mors sont espacés d'un entrefer de 5 cm. La vitesse d'essai est de 250 mm/min.

Délamination :

Le film est soudé sur lui-même sur une surface de 10 cm de longueur et 1 cm de largeur, à l'aide d'un appareil Brugger «HSG-C». La soudure est réalisée en 1 seconde, à une température de 110°C (barres haute et basse) et à une force de 500N. L'éprouvette d'une largeur de 15 mm est placée dans un appareil de traction Lloyd Instruments muni d'une cellule de 100N; l'entrefer entre les mors est d'environ 5 cm et la vitesse d'essai est de 250 mm/min. Les résultats sont exprimés en N/15mm.

Contrainte de rétraction

Une éprouvette de 15mm de largeur, placée dans une enceinte thermique, est soumise à une élévation de température, alors que le film est placé entre les mors immobiles d'un banc de traction de MTS Systems, muni d'une cellule de mesure de 5daN. On enregistre l'évolution de la force de rétraction en fonction de la température de l'enceinte. Les résultats sont donnés en MPa, pour des températures fixées.

Les résultats obtenus pour chaque film sont également présentés dans le tableau II ci-dessous.

TABLEAU II

| | Ex Comp. | Ex 1 | Ex2 | Ex3 | Ex4 | Ex5 | Ex6 | Ex7 |
|---|---|---|---|---|---|---|---|---|
| **Conditions opératoires** | | | | | | | | |
| Taux étirement MD/TD | 2.85/3.55 | 2.85/3.55 | 2.85/3.55 | 2.85/3.55 | 2.85/3.55 | 2.85/3.55 | 2.85/3.55 | 2.85/3.55 |
| Température bi-orientation film 2$^{ième}$ Bulle (°C) | 75 | 73 | 72 | 74 | 76 | 76 | 73 | 72 |
| Température.stabilisation film 3$^{ième}$ Bulle (°C) | 91 | 100 | 100 | 100 | 112 | 130 | 99 | 99 |
| Taux de relaxation 3$^{ième}$ bulle MD/TD (%) | 10/10 | 10/15 | 10/10 | 5/5 | 10/10 | 10/10 | 10/10 | 10/10 |
| **Propriétés physiques** | | | | | | | | |
| Taux de rétraction MD/TD au bain-marie (%) à 90°C | 14,0/16,0 | 6,0/6,0 | 8,0/10,0 | 12.0/13,0 | 4,0/5,0 | 2,5/2,5 | 10.0/12.0 | 12,0/10,0 |
| Taux de rétraction MDITD à l'air sec (%) à 100°C | 13,0/12,0 | 5,0/5,0 | 6.0/8,5 | 9,0/11,0 | 5,5/8,0 | 3,0/3,0 | 6,018,5 | 6,0/7,0 |
| à 120°C | 13,5114,0 | 9,0/8,0 | 15,0/113,0 | 16,0/18,0 | 8,0/10,0 | 5,0/6,0 | 11,0/14,0 | 9,0/13,0 |
| à 140°C | 16,0120,0 | 14,0/12,5 | 18,0/16,0 | 17,0/19,0 | 11,5/14,5 | 10,0/11,5 | 15,0/20,0 | 15,0119,0 |
| Résistance au Déchirement MD/TD (N/mm d'épaisseur) | 10/24 | 65/75 | 57/94 | 63/108 | 55/94 | 83/81 | 77/121 | 57/107 |
| Traction - Allongement à la rupture MDITD (%) | 188/129 | 163/101 | 189/146 | 149/83 | 198/139 | 183/110 | 213/123 | 216/113 |
| Traction - Contrainte à la rupture MDITD (MPa) | 158/163 | 1491129 | 155/200 | 143/150 | 158/158 | 140/176 | 182/164 | 129/115 |
| Délamination MD/TD - Force maximale (N) | 10,5/(-) | 18,8/21,1 | 22,01(-) | 18,71(-) | 16,0/18,7 | 26,0129 | 19,21(-) | 17,7/24 |
| Contrainte de rétraction MD/TD (MPa) à 40°C | 1,6/0,5 | 0,210,3 | 0,4/0,4 | 0,5/0,5 | 0,3/0,3 | 0,3/0.1 | 0,2/0,3 | 0,2/0,2 |
| à 50°C | 1,9/2,1 | 1,1/1,3 | 1,0/2,1 | 1,5/2,1 | 0,811,4 | 0,7/0,6 | 0,7/1,9 | 0,811,1 |
| à 60°C | 2,2/2,6 . | 1,7/1.9 | 1,8/2,7 | 2,5/3,5 | 1,112,0 | 1,0/1,4 | 1,3/2,4 | 1,3/1,8 |
| (-) : non mesuré | | | | | | | | |

Les films selon l'invention des exemples 1-7 présentent une résistance au déchirement très nettement supérieure à celle du film de l'exemple comparatif. Pour les exemples 3, 6 et 7, la résistance au déchirement est au moins 4 fois supérieure dans chaque direction à celle de l'exemple comparatif.

Les films des exemples 1-7 présentent également une force de délamination entre la couche soudante et la couche PA adjacente nettement supérieure.

Plus la température de stabilisation appliquée sur le film tubulaire de la troisième bulle est élevée, plus le taux de rétraction et la force de rétraction du film multicouche diminuent, une diminution très nette apparaît lorsque la température de stabilisation est supérieure ou égale à la température de fusion de la résine PE constituant la couche scellante. De même, plus le taux de relaxation appliqué sur le film de la troisième bulle est élevé, plus le taux de rétraction et la force de rétraction diminuent.

## Revendications

1. Procédé de fabrication d'un film multicouche comprenant :

   a) une étape de coextrusion de résines pour former un film tubulaire extrudé sous la forme d'une première bulle, ledit film tubulaire comportant au moins une couche de surface extérieure comprenant une résine polyester ou une résine polyoléfine, une couche intermédiaire comprenant une résine polyamide, et une couche de surface intérieure de thermo-scellage comprenant une résine polyoléfine ou un mélange de résines polyoléfine,
   b) une étape d'orientation biaxiale du film tubulaire chauffé sous la forme d'une deuxième bulle, et
   c) une étape de stabilisation par traitement thermique, et éventuellement de relaxation, du film tubulaire sous la forme d'une troisième bulle,

   **caractérisé en ce que** lors de l'étape de stabilisation c), le film tubulaire est porté à une température de stabilization supérieure ou égale à la température de fusion de la résine polyoléfine majoritaire de ladite couche de surface intérieure de thermo-scellage.

2. Procédé selon la revendication 1, **caractérisé en ce que** le traitement thermique du film tubulaire à la temperature de stabilisation dans l'étape c) est réalisé au moyen d'un four infrarouge, ladite température de stabilisation étant comprise entre 80 et 150°C.

3. Procédé selon la revendication 1 ou 2, **caractérisé en ce que** le taux de.relaxation longitudinal MD et le taux de relaxation transversal TD appliqués à la troisième bulle de l'étape c) sont chacun compris entre 5 et 20%.

4. Procédé selon l'une des revendications 1 à 3, **caractérisé en ce que** le taux d'étirement transversal TD appliqué à la deuxième bulle dans l'étape b) est compris entre 2,5 et 4,5, le taux d'étirement longitudinal MD appliqué étant compris entre 2,5 et 4.

5. Film multicouche susceptible d'être obtenu par le procédé selon l'une des revendications 1 à 4, comportant au moins une couche de surface extérieure comprenant une résine polyester ou une résine polyoléfine, une couche intermédiaire comprenant une résine polyamide, et une couche de surface intérieure de thermo-scellage comprenant une résine polyoléfine ou un mélange de résines polyoléfine, **caractérisé en ce qu'**il présente une résistance au déchirement supérieure ou égale à 30 N/mm, tant dans la direction machine (MD) que dans la direction transversale (TD), et une résistance à la délamination de la couche de surface intérieure de thermo-scellage supérieure à 15 N/15mm dans la direction machine (MD) et transversale (TD).

6. Film multicouche selon la revendication 5, **caractérisé en ce qu'**il présente un taux de rétraction total à 120°C sous air sec inférieur à 35%.

7. Film multicouche selon l'une des revendications 5 ou 6, **caractérisé en ce qu'**il présente une contrainte de retraction à 60°C inférieure ou égale à 3 MPa, tant dans la direction machine MD que dans la direction transversale TD.

8. Film multicouche selon l'une des revendications 5 à 7, **caractérisé en ce qu'**il présente une épaisseur totale comprise entre 20 et 50 $\mu$m.

9. Film multicouche selon l'une des revendications 5 à 8, **caractérisé en ce qu'**il présente une couche de surface extérieure comprenant une résine polyoléfine ayant un point de fusion entre 130 et 170°C ou une résine polyester ayant un point de fusion compris entre 200 et 260°C, une couche intermédiaire comprenant une résine polyamide (PA) ayant un point de fusion compris entre 130 et 220°C, et une couche de surface intérieure de thermo-scellage comprenant une résine polyoléfine ou un mélange de résines polyoléfine dont la résine polyoléfine majoritaire a un point de fusion inférieur aux points de fusion des résines constitutives de la couche externe et de la couche intermédiaire, compris entre 80 et 150°C.

**Patentansprüche**

1. Verfahren zur Herstellung einer mehrlagigen Folie, umfassend:

   a) einen Schritt der Coextrusion von Harzen, um eine extrudierte röhrenförmige Folie in Form einer ersten Blase zu bilden, wobei die röhrenförmige Folie mindestens eine äußere Oberflächenschicht, die ein Polyesterharz oder ein Polyolefinharz umfasst, eine Zwischenschicht, die ein Polyamidharz umfasst, und eine innere Heißversiegelungs-Oberflächenschicht, die ein Polyolefinharz oder eine Polyolefinharzmischung umfasst, aufweist,
   b) einen Schritt der biaxialen Verstreckung der erhitzten röhrenförmigen Folie, sodass diese eine zweite Blase bildet, und
   c) einen Schritt der Stabilisierung mittels Wärmebehandlung, und möglicherweise der Entspannung, der röhrenförmigen Folie, sodass diese eine dritte Blase bildet,
   **dadurch gekennzeichnet, dass** die röhrenförmige Folie beim Stabilisierungsschritt c) auf eine Stabilisierungstemperatur gebracht wird, die mindestens so hoch wie die Schmelztemperatur des Polyolefinharzes ist, welches den überwiegenden Teil der inneren Heißversiegelungs-Oberflächenschicht ausmacht.

2. Verfahren nach Anspruch 1, **dadurch gekennzeichnet, dass** in Schritt c) die Wärmebehandlung der röhrenförmigen Folie bei der Stabilisierungstemperatur mittels eines Infrarotofens durchgeführt wird, wobei die Stabilisierungstemperatur im Bereich von 80 bis 150 °C liegt.

3. Verfahren nach Anspruch 1 oder 2, **dadurch gekennzeichnet, dass** der Entspannungsgrad in Längsrichtung MD und der Entspannungsgrad in Querrichtung TD, welche auf die dritte Blase des Schritts c) angewendet werden, jeweils im Bereich von 5 bis 20 % liegen.

4. Verfahren nach einem der Ansprüche 1 bis 3, **dadurch gekennzeichnet, dass** der Dehnungsgrad in Querrichtung TD, welcher in Schritt b) auf die zweite Blase angewendet wird, im Bereich von 2,5 bis 4,5 liegt, wobei der angewendete Dehnungsgrad in Längsrichtung MD im Bereich von 2,5 bis 4 liegt.

5. Mehrlagige Folie, die mittels des Verfahrens nach einem der Ansprüche 1 bis 4 erhalten werden kann, umfassend mindestens eine äußere Oberflächenschicht, die ein Polyesterharz oder ein Polyolefinharz umfasst, eine Zwischenschicht, die ein Polyamidharz umfasst, und eine innere Heißversiegelungs-Oberflächenschicht, die ein Polyolefinharz oder eine Polyolefinharzmischung umfasst, **dadurch gekennzeichnet, dass** sie eine Reißfestigkeit von mindestens 30 N/mm aufweist, sowohl in Maschinenrichtung (MD) als auch in Querrichtung (TD), sowie eine Delaminationsfestigkeit der inneren Heißversiegelungs-Oberflächenschicht von mehr als 15 N/15 mm in Maschinen(MD)- und Quer(TD)-Richtung.

6. Mehrlagige Folie nach Anspruch 5, **dadurch gekennzeichnet, dass** sie bei 120 °C in trockener Luft einen Gesamtschrumpfungsgrad von weniger als 35 % aufweist.

7. Mehrlagige Folie nach einem der Ansprüche 5 oder 6, **dadurch gekennzeichnet, dass** sie bei 60 °C eine Schrumpfungsspannung von höchstens 3 MPa aufweist, sowohl in Maschinenrichtung MD als auch in Querrichtung TD.

8. Mehrlagige Folie nach einem der Ansprüche 5 bis 7, **dadurch gekennzeichnet, dass** sie eine Gesamtdicke im Bereich von 20 bis 50 $\mu$m aufweist.

9. Mehrlagige Folie nach einem der Ansprüche 5 bis 8, **dadurch gekennzeichnet, dass** sie eine äußere Oberflächenschicht aufweist, die ein Polyolefinharz mit einem Schmelzpunkt zwischen 130 und 170 °C und ein Polyesterharz mit einem Schmelzpunkt im Bereich von 200 bis 260 °C umfasst, sowie eine Zwischenschicht, die ein Polyamidharz (PA) mit einem Schmelzpunkt im Bereich von 130 bis 220 °C umfasst, und eine innere Heißversiegelungs-Oberflächenschicht, die ein Polyolefinharz oder eine Polyolefinharzmischung umfasst, deren überwiegendes Polyolefinharz einen Schmelzpunkt hat, der niedriger als die Schmelzpunkte der Harze ist, aus welchen die Außenschicht und die Zwischenschicht bestehen, im Bereich von 80 bis 150 °C.

**Claims**

1. Method of making a multilayer film comprising:

   a) a step of co-extruding resins in order to form an extruded tubular film in the form of a first bubble, said tubular film comprising at least an outer surface layer including a polyester resin or a polyolefin resin, an intermediate layer including a polyamide resin, and a heat-sealing inner surface layer including a polyolefin resin or a mixture of polyolefin resins,
   b) a step of biaxially orienting the heated tubular film in the form of a second bubble, and
   c) a step of stabilizing via a heat treatment and optionally of relaxing, of the tubular film in the form of a third bubble, **characterised in that**, during the stabilization step c), the tubular film is brought to a stabilizing temperature greater than or equal to the melting point of the major polyolefin resin of said heat-sealing inner surface layer.

2. Method according to claim 1, **characterised in that**, in step c), the heat treatment of the tubular film at the stabilizing temperature is carried out by means of an infrared oven, said stabilizing temperature being between 80 and 150°C.

3. Method according to claim 1 or 2, **characterised in that** the longitudinal relaxation ratio MD and the transverse relaxation ratio TD applied to the third bubble of step c) are each between 5 and 20%.

4. Method according to one of claims 1 to 3, **characterised in that** the transverse stretch ratio TD applied to the second bubble in step b) is between 2.5 and 4.5, the longitudinal stretch ratio MD applied being between 2.5 and 4.

5. Multilayer film capable of being obtained by the method according to one of claims 1 to 4, comprising at least an outer surface layer including a polyester resin or a polyolefin resin, an intermediate layer including a polyamide resin, and a heat-sealing inner surface layer including a polyolefin resin or a mixture of polyolefin resins, **characterised in that** it has a tear resistance greater than or equal to 30 N/mm, in both the machine direction (MD) and in the transverse direction (TD) , and a delamination resistance of the heat-sealing inner surface layer greater than 15 N/mm in the machine direction (MD) and in the transverse direction (TD).

6. Multilayer film according to claim 5, **characterised in that** it has a total shrinkage ratio at 120°C in dry air of less than 35%.

7. Multilayer film according to one of claims 5 or 6, **characterised in that** it has a shrinkage stress at 60°C less than or equal to 3 MPa, in both the machine direction MD and in the transverse direction TD.

8. Multilayer film according to one of claims 5 to 7, **characterised in that** it has a total thickness of between 20 and 50 μm.

9. Multilayer film according to one of claims 5 to 8, **characterised in that** it has an outer surface layer including a polyolefin resin having a melting point of between 130 and 170°C or a polyester resin having a melting point of between 200 and 260°C, an intermediate layer including a polyamide resin (PA) having a melting point of between 130 and 220°C, and a heat-sealing inner surface layer including a polyolefin resin or a mixture of polyolefin resins, the major polyolefin resin of which has a melting point lower than the melting points of the resins constituting the outer layer and the intermediate layer, which is between 80 and 150°C.

FIGURE 1

EP 1 993 809 B2

**EP 1 993 809 B2**

## RÉFÉRENCES CITÉES DANS LA DESCRIPTION

**Documents brevets cités dans la description**

- EP 1084035 A

- EP 1190847 A